(19) Europäisches Patentamt

European Patent Office

Office européen des brevets

(11) **EP 1 018 694 B1**

(12) **EUROPEAN PATENT SPECIFICATION**

(45) Date of publication and mention
of the grant of the patent:
**13.04.2005 Bulletin 2005/15**

(51) Int Cl.[7]: **G06K 9/00**, G06T 7/00,
G06K 9/20

(21) Application number: **99117258.6**

(22) Date of filing: **02.09.1999**

(54) **System and method for automatic graph parsing**

System und Verfahren zur automatischen Graphensyntaxanalyse

Système et méthode d'analyse syntactique des graphes

(84) Designated Contracting States:
**DE FR GB**

(30) Priority: **08.01.1999 US 227597**

(43) Date of publication of application:
**12.07.2000 Bulletin 2000/28**

(73) Proprietor: **Hewlett-Packard Company,
A Delaware Corporation
Palo Alto, CA 94304 (US)**

(72) Inventor: **Boll, David
Greeley, CO 80634 (US)**

(74) Representative: **Schoppe, Fritz, Dipl.-Ing.
Schoppe, Zimmermann, Stöckeler & Zinkler
Patentanwälte
Postfach 246
82043 Pullach bei München (DE)**

(56) References cited:
**EP-A- 0 654 750        US-A- 5 111 514**

• **PATENT ABSTRACTS OF JAPAN vol. 017, no.
129 (P-1503), 18 March 1993 (1993-03-18) & JP 04
309186 A (MATSUSHITA ELECTRIC IND CO
LTD), 30 October 1992 (1992-10-30)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates generally to image processing, and, more particularly, to a system and method for automatic graph parsing.

BACKGROUND OF THE INVENTION

The field of image processing has been around for quite some time. Image processing generally refers to the technology of recognizing and manipulating images electronically. For example, scanning devices are devices that transfer an image from printed form into electronic form. Typically, a scanner will include a software processing package that is executed on an accompanying processing device, such as a computer. The software package may include many tools, one of which is an analysis tool. The analysis tool is responsible for, among other things, recognizing particular images or portions thereof on the scanned page, or document. Typically, the image processing analysis package will be capable of recognizing and manipulating various features of a scanned page, including, but not limited to, pictures, line art and text.

Scanners capable of reading and converting a page into electronic format have been available for some time. Typically, a scanner will electronically read a page and then a user will classify the different types of images on the page into regions. The regions may include, for example, text, photographs, drawings, charts, tables, business graphics, equations, handwriting, logos, *etc.* The scanner analysis code will then electronically store the information for later presentation and use. The analysis package will typically classify the different regions of the scanned image based upon adjustable characteristics. For example, the analysis package may, based upon certain settings, classify normal text as text and may classify large text as a drawing. Once classified, the image may be manipulated in a meaningful way depending on the level of sophistication present in the analysis package.

JP 04-309186 A teaches an approach in which, from the graphical representation of graph elements, only the shape thereof is determined, whereas the respective information concerning the position of the graph elements and their size is determined on the basis of text information derivable from the image of the graph.

EP 0 654 750 A describes a method for analysing data defining an image and deals with the representation of a hand-written image on a computer system by scanning the hand-written representation of the image, recognizing the kind of graph in the hand-written image, which is stored in the recognition system so that, at the output means of the system, a representation of the input data can be provided.

SUMMARY OF THE INVENTION

It is the object of the present invention to provide an efficient approach for generating from a graphical representation of a graph a data table.

The invention provides a system and method for automatic graph parsing. The invention allows a user of a scanner to, in real time, designate a region of a scanned image as a graph and automatically parse the graph into a data table, which enables the user to perform additional manipulations on the data that represents the graph. Although not limited to these particular applications, the system and method for automatic graph parsing are particularly suited for manipulating information pertaining to scanned information. Other applications may include manipulating documents from a digital database/file system or from other digital capture devices, such as video capture systems and digital cameras.

Architecturally, the present invention can be conceptualized as a system for automatic graph parsing comprising a document analysis software component and logic residing within the document analysis software component, configured to analyze and convert image data to a data table, wherein the image data corresponds to a graph.

The present invention may also be conceptualized as providing a method for automatic graph parsing. In accordance with the inventive method, image data is developed and delivered to an automatic graph parsing logic device, which converts the image data to a data table.

Other features and advantages of the invention will become apparent to one with skill in the art upon examination of the following drawings and detailed description. These additional features and advantages are intended to be included herein within the scope of the present invention.

BRIEF DESCRIPTION OF THE SEVERAL VIEWS OF THE DRAWINGS

The present invention, as defined in the claims, can be better understood with reference to the following drawings. The components within the drawings are not necessarily to scale relative to each other, emphasis instead being placed upon clearly illustrating the principles of the present invention.

Fig. 1 is a schematic view of an exemplary scanner and computer system in which the logic of the present invention resides;

Fig. 2 is a schematic view illustrating the user interface and analysis code of Fig. 1 in which the logic of the present invention resides;

Fig. 3A is a schematic view illustrating the tools of the graph typing logic of Fig. 2;

Fig. 3B is a graphical representation illustrating the operation of the rectangle recognition (constant color, solid region) tool of Fig. 3A;

Figs. 4A and 4B are collectively a flow diagram illustrating the operation of the automatic graph parsing logic of Figs. 1, 2 and 3;

Fig. 5A is a schematic view illustrating an embodiment of the parsing operation and the generation of the data table in accordance with the present invention 1 for a pie chart;

Fig. 5B is a schematic view illustrating an example of the parsing operation and the generation of the data table of Fig. 1 for a bar chart;

Fig. 5C is a schematic view illustrating an example of the parsing operation and the generation of the data table of Fig. 1 for a line graph; and

Figs. 6A and 6B collectively illustrate the manner in which the data table of Fig. 1 is created for both a one dimensional bar graph and a two dimensional bar graph.

## DETAILED DESCRIPTION OF THE INVENTION

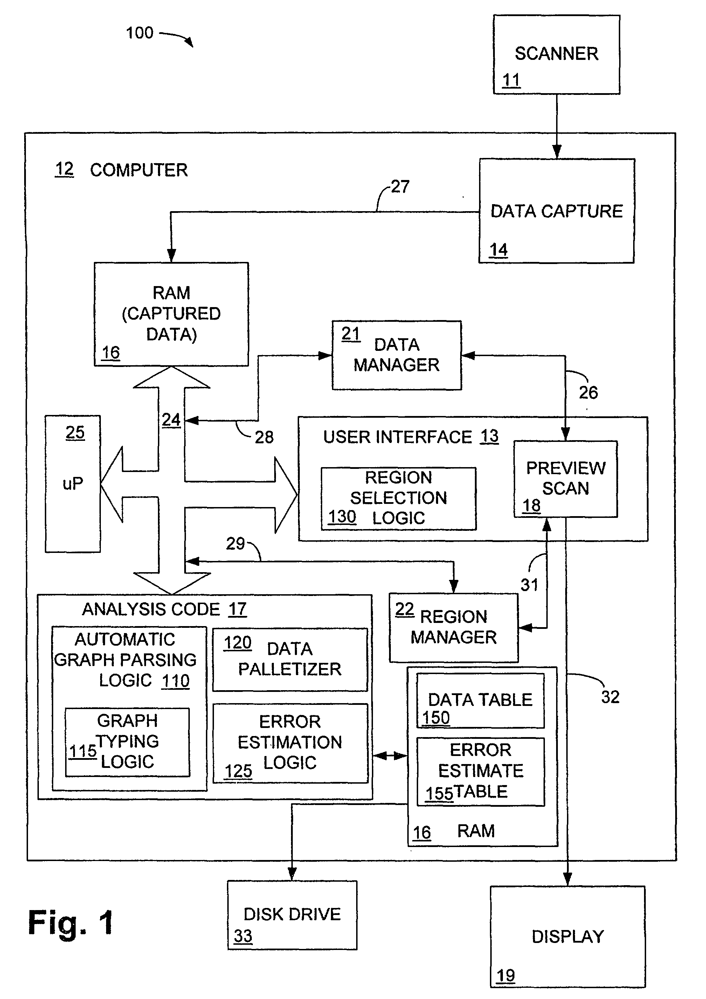

Turning now to Fig. 1, shown is a schematic view of a scanner and computer system 100 in which the automatic graph parsing logic 110 of the present invention resides.

Illustratively, scanner 11 scans a document placed therein in cooperation with computer 12. Computer 12 can be any general purpose computer that is capable of connecting to and executing the software that enables scanner 11 to function. Computer 12 may be, for example, a personal computer or may be virtually any computer capable of communicating with scanner 11. A scanned image is captured by data capture block 14 located within computer 12. The scanned image data is illustratively stored in random access memory (RAM) 16. RAM 16 communicates with analysis code 17, user interface 13, and microprocessor (uP) 25 over bus 24.

Analysis code 17 is illustratively the logic that operates in conjunction with scanner 11 to determine the region types, locations and statistics of the scanned image that is stored as captured data in RAM 16. As stated above, region types may include text, photographs, graphs, equations, drawings, tables, business graphics, etc. Furthermore, analysis code 17 in conjunction with uP 25 is the underlying processing engine that maintains the scanned image data. Analysis code 17 also includes automatic graph parsing logic 110, which further includes graph typing logic 115 of the present invention, and also includes data palletizer 120 and error estimation logic 125. Automatic graph parsing logic 110 resides within analysis code 17, which communicates with data manager 21 over bus 24 and connection 28. Data manager 21 communicates with bus 24 over connection 28 in order to access the data stored in RAM 16 in order to perform a preview scan operation or other post analysis tasks. Post analysis tasks may include, for example, printing, faxing, optical character recognition, etc. Region manager 22 communicates with bus 24 over connection 29 in order to access information pertaining to the region clustering maintained within analysis code 17 in order to draw a scanned image on display 19 during a preview scan operation. Also included in RAM 16 are the data table 150 and error estimate table 155, which will be described in detail below. The data table 150 and the error estimate table 155 may reside within RAM 16 during their construction and may then be written out to, for example, a disk drive 33, as output files. Alternatively, the data table and the error estimate table 155 may reside elsewhere (e.g., in a disk file) during processing.

Automatic graph parsing logic 110 and graph typing logic 115 execute in uP 25 and will be discussed in detail below. User interface 13 illustratively includes preview scan block 18, which allows a user of a scanner to view the document to be scanned prior to final scanning, or otherwise, prior to sending the appropriate scanned data regions to downstream destinations (applications, storage, etc.). Preview scan 18 outputs the scanned image on connection 32 for output to a user on display 19. User interface 13 also includes region selection logic 130, which may either be automated or performed manually by a user of a scanner in order to identify the region (in this preferred embodiment, a graph) of interest to the analysis code 17.

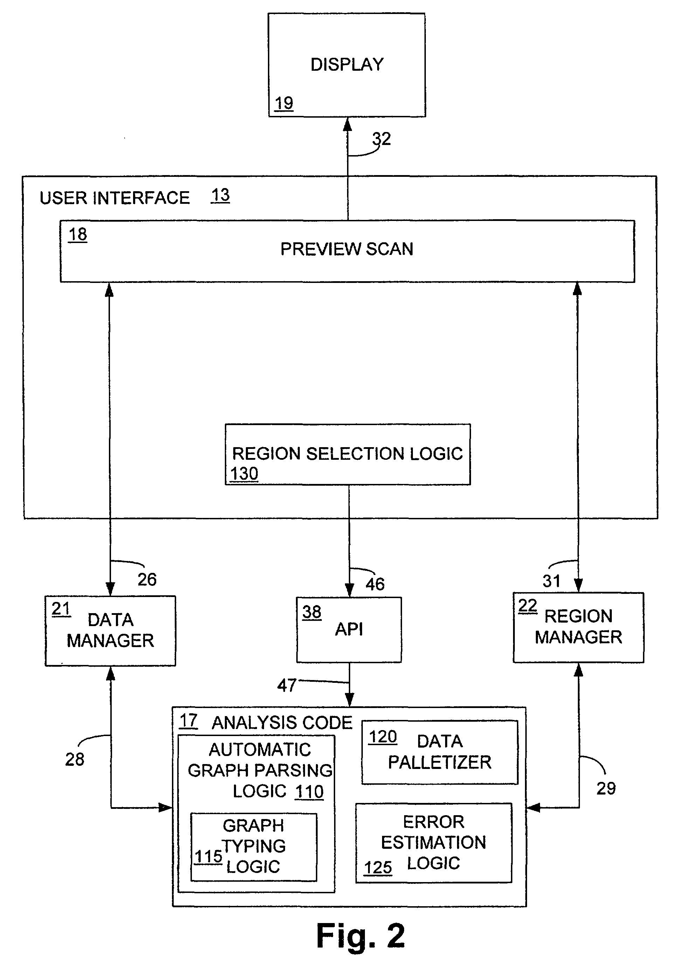

Fig. 2 is a schematic view illustrating the user interface 13 and analysis code 17 of Fig. 1, in which the logic of the present invention preferably resides. User interface 13 includes preview scan block 18 and region selection logic 130. Region selection logic 130 is illustratively the user interface control that allows the selection of a particular region (in this preferred embodiment, a graph) so that the region may be operated upon by automatic graph parsing logic 110. Region selection logic 130 may be, for example, executed by a user of a scanner by selecting a particular graph in order to inform the automatic graph parsing logic 110 that a graph is to be parsed, or region selection logic 130 may operate automatically to identify regions that appear to be graphs. Region selection logic 130 communicates with application programming interface (API) 38 over connection 46. Automatic graph parsing logic 110, graph typing logic 115, and data palletizer 120 reside within analysis code 17 and contain the logic necessary to allow a user to automatically parse a selected graph.

API 38 communicates with analysis code 17 over connection 47. Analysis code 17 also communicates with data manager 21 over connection 28 and with region manager 22 over connection 29.

Automatic graph parsing logic 110, graph typing logic 115 and data palletizer 120 are accessed by the API 38 calls through analysis code 17 over connection 47. Data manager 21 communicates with preview scan 18 over connection 26 and region manager 22 communicates with preview scan 18 over connection 31 in order to display preview scan information including regions and graph parsing to a user over display 19. Data manager 21 and region manager 22 receive information pertaining to parsed graph regions from analysis code 17 over connections 28 and 29, respectively.

A user selects a graph to be parsed through user interface 13 and view the selection on display 19. For example, a user may select a graph on a page and employ the automatic graph parsing logic 110 in order to build a data table that represents the graph. Once a data table is built, manipulation of the table, and hence the graph, is possible.

Through the aforementioned selection, region selection logic 130 communicates a signal over connection 46 to API 38. This signal indicates that a user has selected a region (graph) in the displayed image and dictates the API call. API 38 communicates with analysis code 17 over connection 47 in order to update region manager 22 over connection 29 based upon the signal sent by API 38. Region manager 22 stores the data that will be displayed to the user through user interface 13 on display 19. Once the region is selected in accordance with that described above, automatic graph parsing logic 110 will operate upon the selected region (graph) to build a data table that represents the graph. Error estimation logic 125 is used to develop an error estimate for the data table developed by automatic graph parsing logic 110. The error estimates are generated because the picture of the graph is digital and pixel sampling errors may slightly alter the interpretation of the data.

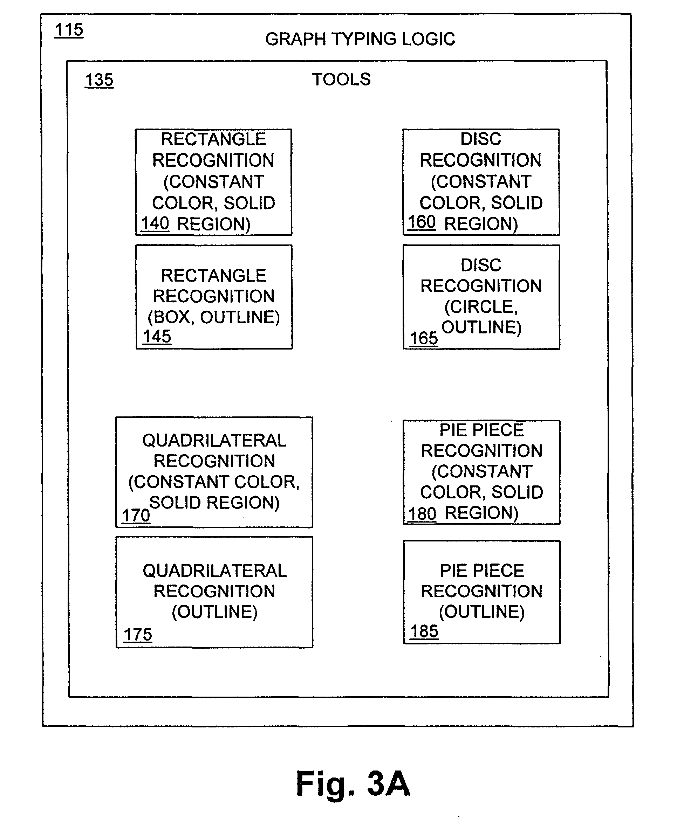

Fig. 3A is a schematic view illustrating some of the tools of the graph typing logic 115 of Fig. 2. Tools 135 include rectangle recognition (constant color, solid region) tool 140, rectangle recognition (box, outline) tool 145, disc recognition (constant color, solid region) tool 160, disc recognition (circle, outline) tool 165, quadrilateral recognition (constant color, solid region) tool 170, quadrilateral recognition (outline) tool 175, pie-piece recognition (constant color, solid region) tool 180 and pie-piece recognition (outline) tool 185. Illustratively, for each shape, one tool is designed to recognize the border (outline) and one tool is designed to recognize the body (constant color or solid region) within the border. It is important to note that the aforementioned tools represent merely an example of the tools that can be used with the automatic graph parsing logic 110 of the present invention. Many other tools may be used by the automatic graph parsing logic, while remaining within the scope of the present invention.

Rectangle recognition (constant color, solid region) tool 140 contains logic to perform the following function. Given a pixel in the bitmap, return (upper left, lower right) of the rectangle of the same color. The following functions are executed:

> FindRectangle(X_Pixel, Y_Pixel, Overwrite:
> Returns: Rectangle (upper left, lower right)
>     Existence flag (=TRUE if a rectangle was found containing X_Pixel and Y_Pixel)
> Overwrite: If nonnegative and a rectangle is found, overwrite the rectangle with "Overwrite" as the palette index, or color.

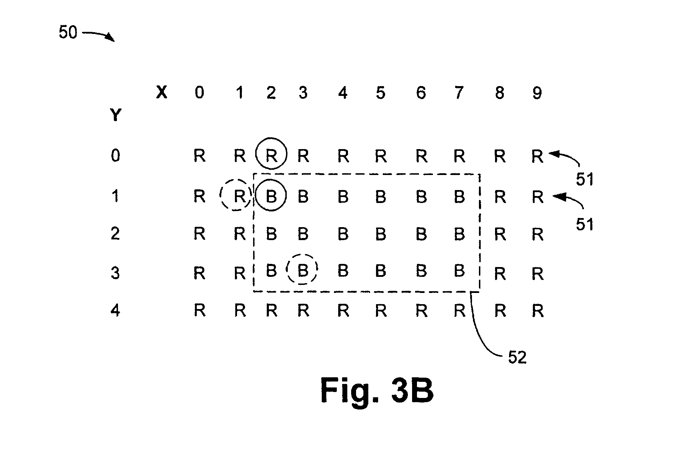

Fig. 3B is a graphical representation illustrating the operation of the rectangle recognition (constant color, solid region) tool 140. Consider a 10 x 5 bitmap 50 having pixels 51, each representing one of two colors, R for red and B for blue. The pixels 51 may be indexed by number, for example, pixel (2,1)=B, where the first numeral within the parenthesis indicates placement along the X, or horizontal axis and the second numeral within the parenthesis indicates placement along the vertical, or Y axis, and pixel (2,0)=R. Now, consider the FindRectangle function as described above.

FindRectangle (3,3,0): starts at pixel (3,3) and tries to find a bounding rectangle that contains it. The search is successful because there is a rectangle 52 (illustrated within the dotted line) containing the pixel (3,3). Therefore, the return is
Rectangle: (2,1) to (7,3)
Existence flag: TRUE.
FindRectangle(1,1,0): starts at pixel (1,1) and tries to find a bounding rectangle. None exists, so the return is
Rectangle: INVALID
Existence flag: FALSE.

In this manner, the rectangle recognition (constant color, solid region) tool 140 identifies rectangles on a page. The other tools mentioned herein operate in a similar manner to identify the respective shapes and features that those tools are designed to identify.

Referring back to Fig. 3A, rectangle recognition (box, outline) tool 145 contains logic to recognize a rectangular box of constant peripheral color.
The following functions are executed:

    FindRectangularBox(X_Pixel, Y_Pixel, Overwrite)
    Returns: Rectangle (upper left, lower right)
        Existence flag (=TRUE if a rectangular box was found containing X_Pixel and Y_Pixel)
    Overwrite: If nonnegative and rectangular box is found, overwrite the rectangular box area with "Overwrite" as the color.

Disc recognition (constant color, solid region) tool 160 contains logic to recognize a disc of constant color. The following functions are executed:

    FindDisc(X_Pixel, Y_Pixel, Overwrite)
    Returns: Circle (Center, Radius)
        Existence flag (=TRUE if a disc was found containing X_Pixel and Y_Pixel)
    Overwrite: If nonnegative and a circle is found, overwrite the circular area with "Overwrite" as the color.

Disc recognition (circle, outline) tool 165 contains logic to recognize the outline of a circle. The following functions are executed:

    FindDiscOutline(X_Pixel, Y_Pixel, Overwrite)
    Returns: Circle(center, radius)
        Existence flag(=TRUE if a disc-outline was found passing through points X_Pixel and Y_Pixel)
    Overwrite: If nonnegative and a disc-outline was found containing X_Pixel and Y_Pixel, overwrite the disc-outline area with "Overwrite" as the color.

Quadrilateral recognition (constant color, solid region) tool 170 contains logic to recognize a quadrilateral of constant color. The following functions are executed:

    FindQuadrilateral(X_Pixel, Y_Pixel, Overwrite)
    Returns: Quadrilateral(discussed below)
        Existence flag(=TRUE if a quadrilateral was found containing
        X_Pixel
    and Y_Pixel)
    Overwrite: If nonnegative and a quadrilateral was found containing X_Pixel and Y_Pixel, overwrite the quadrilateral area with "Overwrite" as the palette index.

Quadrilateral: The data structure for a quadrilateral should contain the following:

    UpperLeftCorner(X_Pixel, Y_Pixel)
    LowerRightCorner(X_Pixel, Y_Pixel)
    UpperLeftAngle.

Quadrilateral recognition (outline) tool 175 contains logic to recognize the outline of a quadrilateral. The following functions are executed:

    FindQuadrilateralOutline(X_Pixel, Y_Pixel, Overwrite)
    Returns: Quadrilateral(discussed above)
        Existence flag(=TRUE if a quadrilateral-outline was found
        containing
    X_Pixel and Y_Pixel)
    Overwrite: If nonnegative and a quadrilateral-outline was found containing X_Pixel and Y_Pixel, overwrite the quadrilateral-outline area with "Overwrite" as the color.

Pie piece recognition (constant color, solid region) tool 180 contains logic to recognize a pie-piece of constant color. The following functions are executed:

```
FindPiePiece(X_Pixel, Y_Pixel, Overwrite)
Returns: PiePiece(discussed below)
     Existence flag(=TRUE if a pie-piece was found containing X_Pixel
     and
Y_Pixel)
Overwrite: If nonnegative and a pie-piece was found containing X_Pixel and Y_Pixel, overwrite the pie-piece area
with "Overwrite" as the color.
```

PiePiece: The data structure for a pie-piece should contain the following:

```
Circle(center, radius)
Angle 1 (beginning of pie-piece arc)
Angle2(end of pie-piece arc)
```

Pie piece recognition (outline) tool 185 contains logic to recognize the outline of a pie-piece. The following functions are executed:

```
FindPiePieceOutline(X_Pixel, Y_Pixel, Overwrite)
Returns: PiePiece(discussed above)
     Existence flag(=TRUE if a pie-piece outline was found containing X_Pixel and Y_Pixel)
Overwrite: If nonnegative and a pie-piece outline was found containing X_Pixel and Y_Pixel, overwrite the pie-
piece outline area with "Overwrite" as the palette index.
```

It will be appreciated that a variety of differing algorithms may be used to implement the various tools, consistent with the concepts of the present invention, and therefore the details of such algorithms need not be described herein. Furthermore, the tools described herein represent merely one way in which to begin building the software tools that are used for graph recognition.

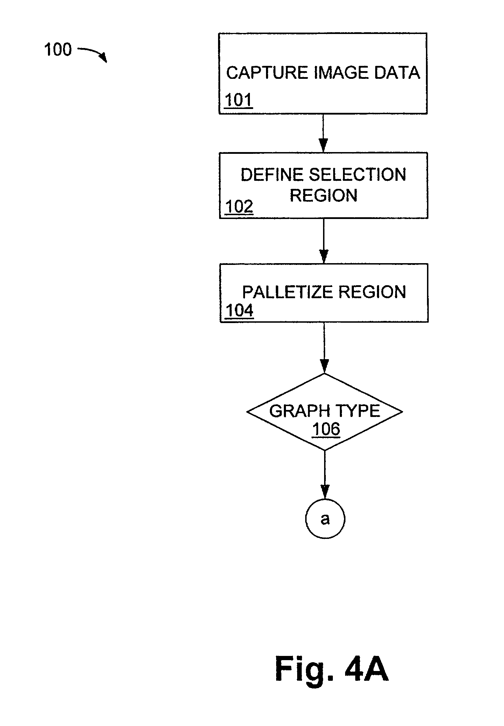

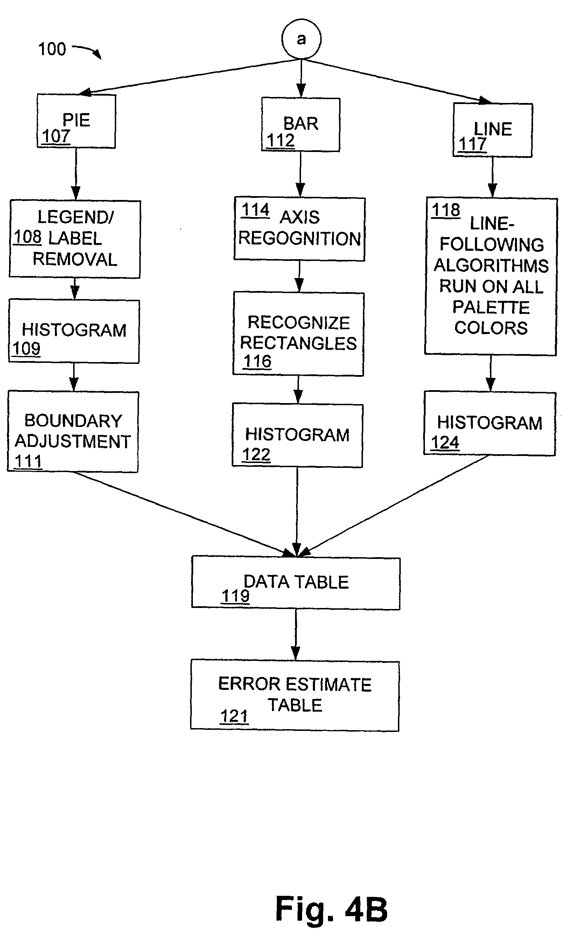

Figs. 4A and 4B collectively are a flow diagram illustrating the operation of the automatic graph parsing logic of Figs. 1, 2 and 3. The following operational description of the automatic graph parsing logic 110 will be in the context of a scanned image, however, the automatic graph parsing logic of the present invention is applicable to other digital image capture applications, and indeed, need not be implemented using a scanner.

In block 101, for example 24-bit, image data containing a picture of a graph is captured by data capture block 14 and stored as captured data in RAM 16 (Fig. 1).

In block 102 the region selection is defined using region selection logic 130 of Figs 1 and 2. Illustratively, in this step a user will select a graph (region of interest) from a scanned page, or the analysis code 17 (Fig. 1) may automatically determine whether a graph is present on a page.

In block 104, data palletizer 120 (Fig. 2) will palletize or quantize the color of the graph data (graph) as is known in the art.

In block 106, the graph type to be parsed is determined by using tools described with respect to Figs. 3A and 3B. For example, in the case of a bitmap for a bar graph, the graph typing logic 115, using the appropriate tool, will detect several rectangles and the two axes. The "presence" of the rectangles allows the graph to be typed as a bar graph and the "size" of the rectangles is used to determine the data values to assign such that the data table 150 (Fig. 1) may be created.

Referring now to Fig. 4B, the parsing of three simple exemplary graph types will be illustrated.

In block 107 a pie chart is illustratively chosen for parsing via the operation of the automatic graph parsing logic 110 of the present invention. The picture of the pie chart should illustratively include a filled circle (pie chart) possibly with some text or data.

In block 108, the legend and any labeling is removed from the graph. The background of the pie chart is recognized (*e.g.*, if the four corner pixels are all the same color, then it is probably a background region). Then the circle of the pie chart is recognized. All non-background data existing outside of the pie chart circle is ignored, or if text is present, the text is recognized.

In block 109 a histogram is created with the aforementioned data remaining after step 108. This should be only data relating to the pie chart. In addition, there may be a color (*e.g.*, black) used to draw the perimeter of the circle and/or the boundaries between the pie pieces.

In block 111, these boundaries are recognized and excluded from the histogram of step 109 so that only data relating to the pie chart is retained in the histogram. The perimeter of a pie chart should not affect the data portions seen in the histogram of the pie chart data, but the boundaries(if they exist) between pieces will. The boundaries will add a small constant to every member of the data set. The constant can be found as illustrated by the following example.

Suppose the histogram count of the boundary and periphery colors is X (assuming all data external to the circle has already been removed from the histogram (*i.e.*, in step 108 above).

$$X=K*R(2pi+N) \quad\quad \text{(equation 1)}$$

where X is the sum of the pixels comprising the perimeter of the circle and N is the number of radial lines drawn between the pieces of the pie, which is also the number of pieces of the pie. K is the line thickness (in pixels) used to draw the borders between the pieces. Plug in R (radius of the circle) and solve for K, rounding K to the nearest integer. Now, add (X-2piRK)/N to each pie chart element of the histogram, assuming that the boundaries and periphery are of equal thickness. If they are not, adjusting for this is not difficult. Now, there exists an approximation of the data used to create the pie chart.

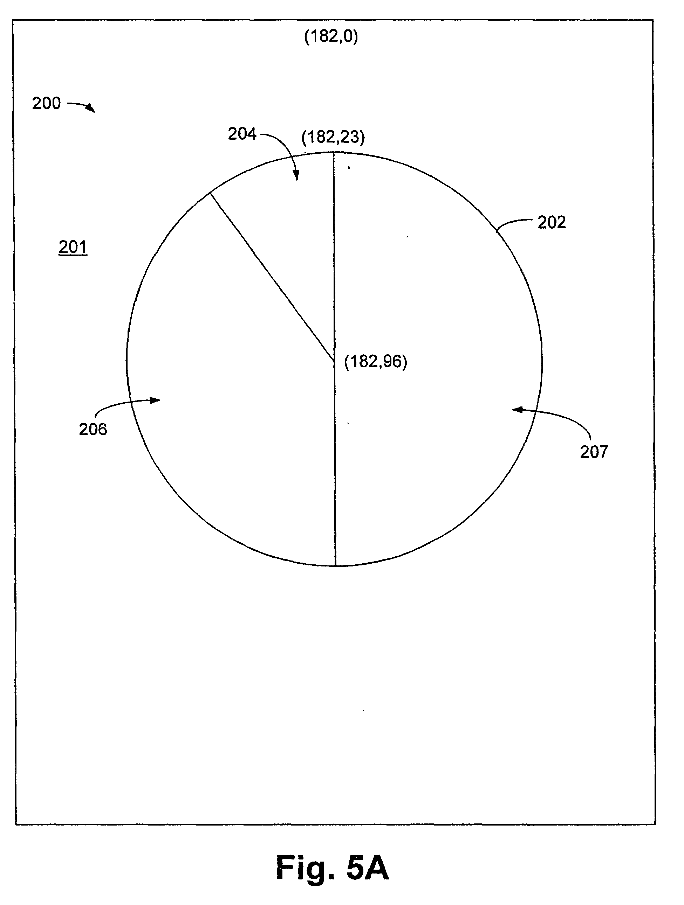

In block 119, the approximation of the data generated above may be output in any sensible form, for example, a text file represented by data table 150 (Fig. 1). This table represents the original graph, now parsed, and available for other post processing tasks. The parsing operation and the generation of the data table will be described in detail below using a pie chart as an example with respect to Fig. 5A.

In block 121 an error estimate table 155 (Fig. 1) is generated by error estimation logic 125 (Fig. 1). For all graph types, the error in the data recovery process should be calculated. This error should be at the most (barring any warping in the scanner) two pixels * (radius of the pie chart, in pixels). The error in the data recovery process should be converted to a relative error metric The relative error corresponds to the precision of the data estimate, given the graphical data from which the data estimate was derived. For example, if a value of 100 is derived having a relative error of 7% for a data point, the actual value of the data point may be between 93 and 107, or in the range of 100-.07 (100) to 100+.07(100). The larger the graph, the smaller the error. Error also reduces with distance form an axis. If desired, the relative error metric may easily be converted to an absolute value.

It should be appreciated that the automatic graph parsing logic 110 of the present invention can be implemented in software, hardware, or a combination thereof.

The flow chart of Figs. 4A and 4B illustrate the functionality and operation of a possible implementation of the method for automatic graph parsing. In this regard, each block represents a module, segment, or portion of code, which comprises one or more executable instructions for implementing the specified logical function(s). It should also be noted that in some alternative implementations, the functions noted in the blocks may occur out of the order noted in Figs. 4A and 4B. For example, two blocks shown in succession in Figs. 4A and 4B may in fact be executed substantially concurrently or the blocks may sometimes be executed in the reverse order, depending upon the functionality involved, as will be further clarified hereinbelow.

In a preferred embodiment, the automatic graph parsing logic 110 is implemented in software that is stored in a memory and that is executed by a suitable microprocessor (uP) situated in a computing device. However, the automatic graph parsing software, which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

Moreover, while the automatic graph parsing logic 110 is illustrated herein with respect to recognizing and manipulating graphical information, the tools used in conjunction with the automatic graph parsing logic 110 are useful for recognizing and manipulating many other attributes of a scanned image, for example but not limited to drawings, photographs, pictures, *etc.*

Furthermore, while the automatic graph parsing logic is illustrated with respect to graphs, it is broadly applicable to all regions generated in a scanned image. The term parsing, as used herein, generally refers to the process by which an image of a graph is analyzed and converted into data, which may be further manipulated.

Fig. 5A is a schematic view illustrating an example of the parsing operation and the generation of the data table of Fig. 1 for a pie chart. Pie chart 200 illustratively includes five colors. Color 201 is the white background, color 202 is the black border, color 204 is a first color of a pie piece, color 206 is a second color of a pie piece and color 207 is a third color of a pie piece. The example illustrated assumes a particular size chart, however, the logic of the present invention is applicable to any size chart or graph.

A histogram of pie chart 200 contains the following data:

color 201: 25391 pixels (white background color)
color 202: 613 pixels (black border color)
color 204: 2068 pixels (pie piece)
color 206: 6258 pixels(pie piece)
color 207: 8249 pixels (pie piece)

Illustratively, colors 204, 206 and 207 represent the data of interest. Color 202 (black) represents the boundary and periphery colors.

From the previous equation 1:

$$X=KR(2pi+N),$$

so

613=K(73)(2pi+3), (X=613 from the histogram data, R=73 from the disc recognition routine, the circle corresponding to the pie chart in this example is 73 pixels in radius, and N=3 because there are three pie pieces). To illustrate, we know that the background in this example is white. Begin from the middle of the top edge and proceed toward the center of the image, examining one pixel at a time. When a non-white pixel is encountered, it indicates the possibility of the border of the pie chart.

Using the above example:

start at pixel (182,0) and move toward the center, checking every pixel. At pixel (182,23) it can be seen that the pixel color is black. The disc recognition (circle, outline) tool 165 is used as follows:
FindDiscOutline(182,23-1) (the -1 exists so as to NOT overwrite any data in the original bitmap) returns:

Center: (182,96)
Radius: 72
Exist: TRUE.

Solving for K results in the thickness of the boundary line in pixels:
    K=613/(73*2pi+3)=1.32=1 (rounded to nearest integer). Now add KR, or 73, to the histogram counts for colors 204, 206 and 207.

color 204 = 2068+73=2141
color 206 = 6258+73=6331
color 207 = 8249+73=8322

This adjusts for the thickness of the line used to separate the pieces.

In order to generate the data table 150 (Fig. 1), the pixel counts could be directly output, however, for a pie chart, it would likely be appropriate to output the degrees of arc that each pie piece covers. The text data file (data table) may appear as follows:

| Pie Chart | | |
| --- | --- | --- |
| | Degrees of Arc | Relative Error |
| Piece 1 | 46 | .068 |
| Piece 2 | 136 | .023 |

(continued)

| Pie Chart | | |
|---|---|---|
| | Degrees of Arc | Relative Error |
| Piece 3 | 178 | .018 |

It should be noted that the exact results of the Degrees of Arc would be 45, 135 and 180 respectively, because in this case we know the exact original data. The answers of 46, 136 and 178, respectively, are within the error estimate of their exact values.

For the degrees of arc, the histogram counts of the three graph components (2141+6331+8322=16794) are summed. This is the total. Then:

$$\text{degrees of arc} = 360*(\text{pixel count})/\text{Total}.$$

The error is bounded (in pixels) by 2R, or 2(73), or 146.

Relative error = (error pixels)/)pixel count) = 146/(pixel count). In this manner, pie chart 200 is parsed to create data table 150.

Referring back to Fig. 4B, in block 112, a bar graph is selected for parsing. Bar graphs and column graphs are treated in the same fashion. There exists two major types of two dimensional (2D) bar graphs, graphs that represent one dimensional (1D) data, and graphs that represent 2D data.

In block 114, the axes of a bar (or column) graph is recognized and any text residing near the axes of the bar graph are recognized to aid in scaling the data. In block 116, any rectangles in the graph are recognized as follows. The graph is traversed by traversing the row that is one pixel off (in both + and -) the X axis. Each time the color changes, the rectangle recognition (constant color, solid region) tool 140 (Fig. 3) is called. This will return the corners of the rectangle. The nonzero Y-value of the corners is the data that will be stored in RAM 16 (Fig. 1) for later processing.

In block 122 a histogram is created with the aforementioned data remaining after step 116. This should be only data relating to the bar graph.

The X data of the bar graph may prove somewhat problematic. Sometimes it is real data and sometimes it serves only to differentiate the data series. The X data that is visible may be output and the user may ignore it if desired. If the data is 2D (evidenced by clumping), the X value is meaningful and a 2D table is output in block 119.

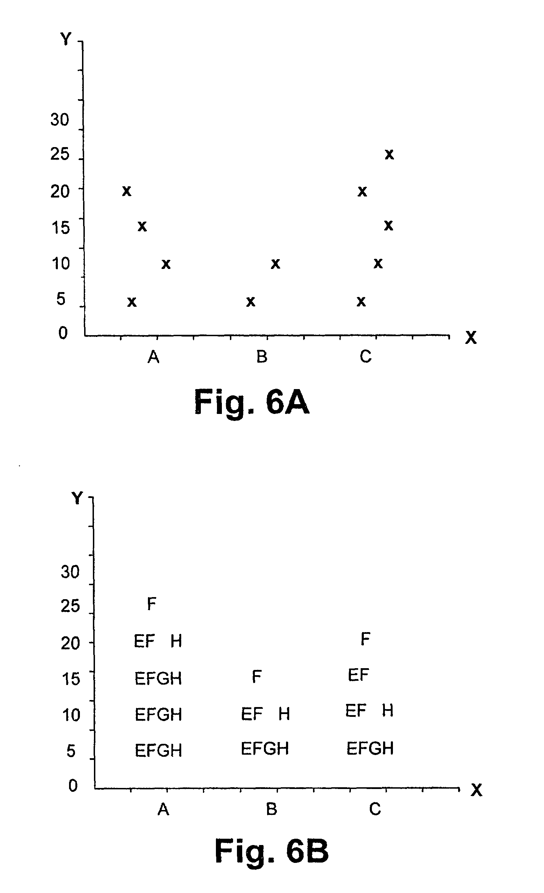

Figs. 6A and 6B collectively illustrate the manner in which the data table of Fig. 1 is created for both one dimensional bar graph and a two dimensional bar graph.

Fig. 6A illustrates a one dimensional graph in which the X axis is not meaningful indicating that the X axis only serves to separate the data. As can be seen from the following one dimensional table, the position of the elements along the X axis has no significance.

A=20
B=10
C=25

Fig. 6B illustrates a two dimensional graph in which the X axis has significance. Consider the following table, from which the graph of Fig. 6B was created.

| | E | F | G | H |
|---|---|---|---|---|
| A | 20 | 25 | 15 | 20 |
| B | 10 | 15 | 5 | 10 |
| C | 15 | 20 | 5 | 10 |

As can be seen in the two dimensional graph of Fig. 6B, the position of the elements (E, F, G and H) along the X axis is relevant in order to effectively communicate the information in the graph.

Referring back to Fig. 4B, in similar fashion to that described above, in block 119, a data table (150) is created and in block 121, an error estimate table is generated.

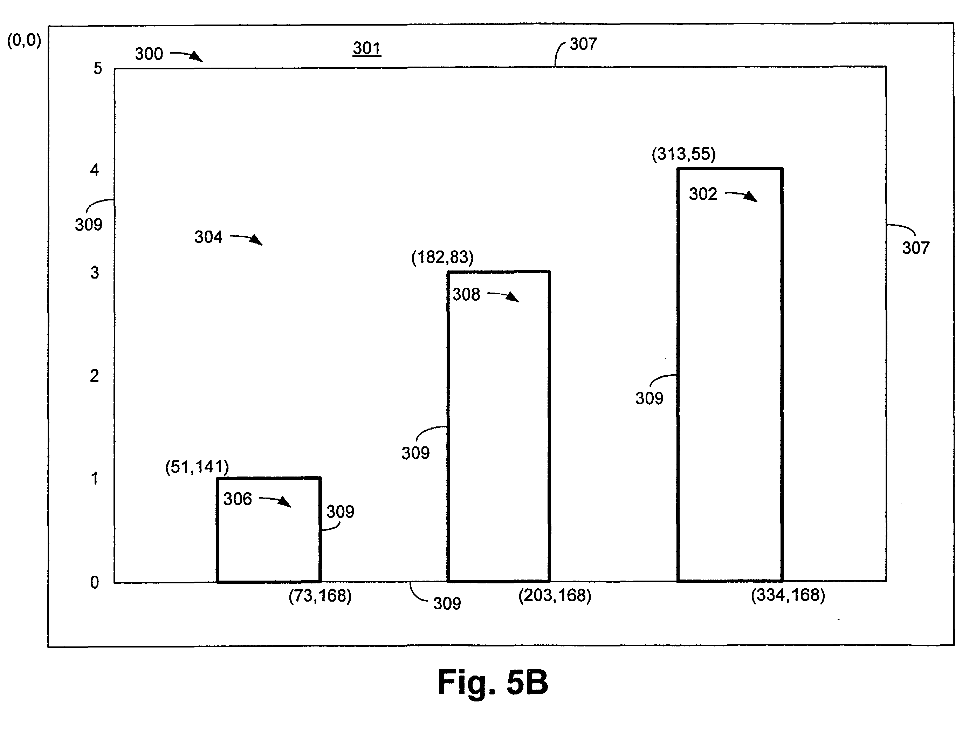

Fig. 5B is a schematic view illustrating an example of the parsing operation and the generation of the data table of Fig. 1 for a bar graph. Bar graph 300 illustratively includes seven colors. Color 301 is the white background, color 302 is suspected data, color 304 is the background color, color 306 is suspected data, color 307 is the graph line, color 308 is suspected data, and color 309 is the graph line and axis labels.

A histogram of bar graph 300 contains the following data:

color 301: 24766 pixels (white background color)
color 302: 2508 pixels (suspected data, yellow)
color 304: 38961 pixels (gray background color)
color 306: 644 pixels (suspected data, blue)
color 307: 710 pixels (dark gray, graph line)
color 308: 1892 pixels (suspected data, purple)
color 309: 3039 pixels (graph line and axis labels, black).

Colors 302 (yellow), 306 (blue), and 308 (purple) probably represent data because the color is not a shade of gray, the pixel counts are small relative to the background color, and the FindRectangle tool (rectangle recognition (constant color, solid region) tool 140) returns TRUE when called with one of the pixels. The FindRectangle tool determines the dimensions of the bounding box for each of the pixel colors as follows:

color 306 (blue): 51,141 - 73,168
color 308 (purple): 182,83 - 203,168
color 302 (yellow): 313,55 - 334,168

The FindRectangleOutline tool (rectangle recognition (box, outline) tool 145) is called with a pixel just outside each color rectangle to determine that there is a black rectangular outline drawn around the outside of all color rectangles. The line is one pixel thick, so the value of one should be added or subtracted from each of the rectangle dimensions above.

color 306 (blue): 50,142 - 72,169
color 308 (purple): 181,84 - 202,169
color 302 (yellow): 312,56 - 333,169.

Because graph 300 is a bar graph the thickness of the bars is not relavant.
Using the above data the height of each bar and the average X coordinate is retained

|  | X | Y |
|---|---|---|
| color 306 (blue) | (50+72)/2 | (169-142) |
| color 308 (purple) | (181+202)/2 | (169-84) |
| color 302 (yellow) | (312+333)/2 | (169-56) |

yielding

color 306 (blue): 61, 27
color 308 (purple): 192, 85
color 302 (yellow): 323, 113.

Now the error may be calculated for each value above. The error is two pixels, so:

|  | DATA | ERROR |
|---|---|---|
| color 306 (blue) | 61, 27 | 2/61, 2/27 |
| color 308 (purple) | 192, 85 | 2/192, 2/85 |
| color 302 (yellow) | 323, 113 | 2/323, 2/113, now converting to decimal notation |

|  | DATA | ERROR |
|---|---|---|
| color 306 (blue) | 61, 27 | .0328, .0741 |
| color 308 (purple) | 192, 85 | .0104, .0235 |

(continued)

|  | DATA | ERROR |
|---|---|---|
| color 302 (yellow) | 323, 113 | .0062, .0177. |

Now, consider the Y axis of bar graph 300. The three columns line up with the axis marks yielding:

|  | DATA | ERROR |
|---|---|---|
| color 306 (blue) | 61, 1 | .0328, .0741 |
| color 308 (purple) | 192, 3 | .0104, .0235 |
| color 302 (yellow) | 323, 4 | .0062, .0177. |

The above values are used to generate the data table 150 of Fig. 1 for bar graph 300 as described above.

In block 117, a line graph is chosen for parsing. Line graphs, like bar graphs, are generally either one or two dimensional. With 2D line graphs, a line following algorithm may be employed to parse the graph and accumulate the histogram data.

In block 118, a line following algorithm is run on all palette colors. A line following algorithm detects adjacent pixels of the same color as the current pixel.

In block 124 a histogram is created with the aforementioned data remaining after step 118. This should be only data relating to the line graph. In block 119 a data table is output in similar fashion to that described above, and in block 121 an error estimate table is generated.

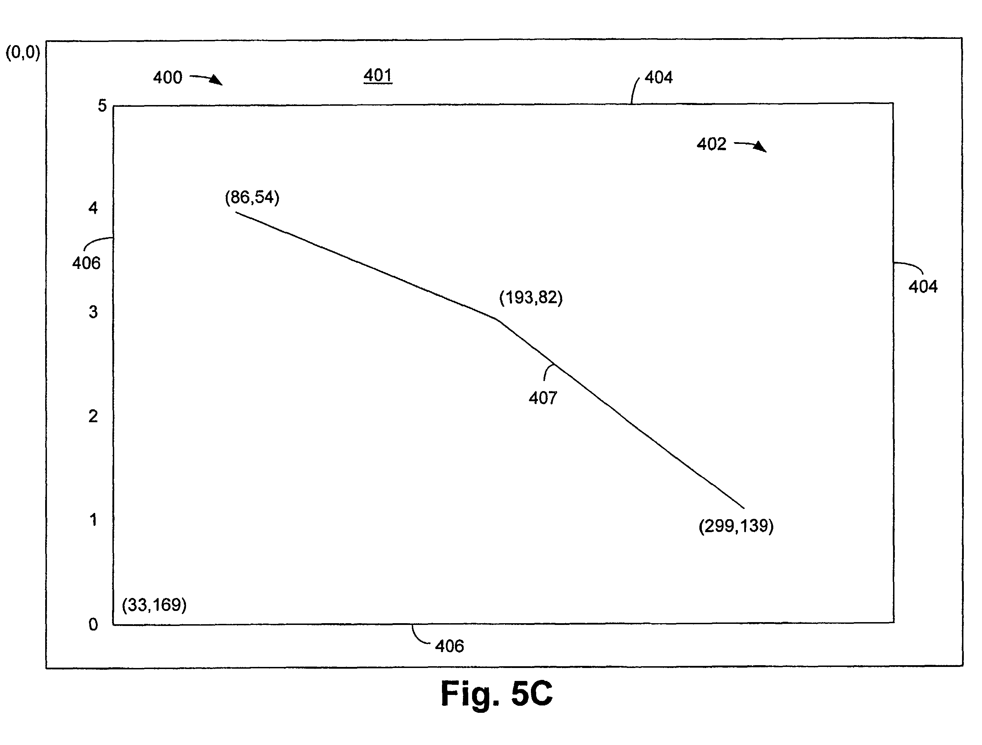

Fig. 5C is a schematic view illustrating an example of the parsing operation and the generation of the data table of Fig. 1 for a line graph. Line graph 400 illustratively includes five colors. Color 401 is the white background, color 402 is the gray background, color 404 is the dark gray background color, color 406 denotes the axis labels, and color 407 is suspected data.

A histogram of line graph 400 contains the following data:

    color 401: 24766 pixels (white background color)
    color 402: 44135 pixels (gray background color)
    color 404: 783 pixels (dark gray background color)
    color 406: 2622 pixels (axis labels, black)
    color 407: 214 pixels (suspected data, blue).

The only suspected data is represented by line 407, so the leftmost blue pixel in the bitmap (86,54) is found. The point (86,54) is input to a line following algorithm (step 118 of Fig. 4B, which will follow the line and output data values when the slope of the line changes or when the end of the line is reached. Line 407 is straight from the starting point (86,54) to (193,82), so (193,82) is added to the list of points to be output. Line 407 continues straight to point (299,139), where it ends. The list of points to be output is:

    86,54
    193,82
    299,139.

If there are no other data points to be processed (as is the case in this example); the X axis is found. In this example, the first gray (color 402) pixel at the bottom of the graph is at row 169. The Y values should be converted as they are numbered from the top of the graph and if they are to be interpreted as data, the Y values should be counted up from row 169. In this manner, each Y value is subtracted from 169 yielding:

    86,115
    193,87
    299,30.

Similarly, because the Y axis, which is the X=0 line, is at column 33, the value of 33 should be subtracted from each of the X values yielding:

    53,115

160,87

266,30.

The data may be output in this format, however, further processing is possible. For example, the labels on the Y axis may be recognized by, for example, an optical character recognition (OCR) program, and determined to be 0, 1, 2, 3, 4 and 5. Furthermore, it may be determined that the three data points (86,54), (193,82), and (299,139) correspond to the Y axis values of 4, 3 and 1 respectively. The error may be calculated for the above values using an error value of two pixels for each data point. The data table and the error estimate table are as follows:

| DATA | ERROR |
|---|---|
| 53, 115 | 2/53, 2/115 |
| 160, 87 | 2/160, 2/87 |
| 266, 30 | 2/266, 2/30. |

Were no OCR data available for the Y axis, the data may be output in its existing format, however, in this example, the error will be converted to a decimal value yielding:

| DATA | ERROR |
|---|---|
| 53,115 | .0377, .0174 |
| 160, 87 | .0125, .0230 |
| 266, 30 | .0075, .0667. |

The Y data may be changed to the above described OCR values for the Y axis as follows:

| DATA | ERROR |
|---|---|
| 53, 4 | .0377, .0174 |
| 160, 3 | .0125, .0230 |
| 266, 1 | .0075, .0667. |

Note that the error terms remain the same as above. The table of values may be output now in the form of a data table.

For example, the system and method for automatic graph parsing can be implemented using various scanning and computing products. Furthermore, the system and method for automatic graph parsing is useful for manipulating documents from a digital database/file system or from other digital capture devices, such as video capture systems and digital cameras. All such modifications and variations are intended to be included herein within the scope of the present invention, as defined in the claims that follow.

**Claims**

1.  An apparatus for automatic parsing a graphical representation of a graph on the basis of an image of the graph, comprising:

    means (120) for quantizing the colors of a region of the image of the graph;

    means (115) for determining a graph type;

    means for generating a histogram indicating a color distribution of the pixels in the region, and

    means for generating a data table (150) representing the original graph on the basis of the determined graph type, wherein the values of the data table (150) are proportional to the color counts of the histogram bins for each quantized color.

2.  The system as defined in claim 1, further comprising means (125) for generating an error estimate table (155) corresponding to said data table (150).

3. A method for automatic parsing a graphical representation of a graph on the basis of an image of the graph, the method comprising the steps of:

quantizing (104) the colors of a region of the image of the graph;

determining (106) a graph type;

generating (109, 122, 124) a histogram indicating a color distribution of the pixels in the region; and

generating (119) a data table representing the original graph an the basis of the determined graph type, wherein the values of the data table (150) are proportional to the color counts of the histogram bins for each quantized color.

4. The method as defined in claim 3, further comprising the step of generating (125) an error estimate table (155) corresponding to said data table (150).


**Patentansprüche**

1. Eine Vorrichtung zum automatischen Parsen einer graphischen Darstellung eines Graphen auf der Basis eines Bildes des Graphen, wobei die Vorrichtung folgende Merkmale aufweist:

eine Einrichtung (120) zum Quantisieren der Farben einer Region des Bildes des Graphen;

eine Einrichtung (115) zum Bestimmen eines Graphtypen;

eine Einrichtung zum Erzeugen eines Histogramms, das eine Farbverteilung der Pixel in der Region angibt, und

eine Einrichtung zum Erzeugen einer Datentabelle (150), die den ursprünglichen Graphen auf der Basis des bestimmten Graphtyps darstellt, wobei die Werte der Datentabelle (150) proportional zu den Farbzählwerten der Histogrammbehältnisse für jede quantisierte Farbe sind.

2. Das System gemäß Anspruch 1, das ferner eine Einrichtung (125) zum Erzeugen einer Fehlerschätztabelle (155), die der Datentabelle (150) entspricht, aufweist.

3. Ein Verfahren zum automatischen Parsen einer graphischen Darstellung eines Graphen auf der Basis eines Bildes des Graphen, wobei das Verfahren folgende Schritte umfasst:

Quantisieren (104) der Farben einer Region des Bildes des Graphen;

Bestimmen (106) eines Graphtypen;

Erzeugen (109, 122, 124) eines Histogramms, das eine Farbverteilung der Pixel in der Region angibt, und

Erzeugen (119) einer Datentabelle, die den ursprünglichen Graphen auf der Basis des bestimmten Graphtyps darstellt, wobei die Werte der Datentabelle (150) proportional zu den Farbzählwerten der Histogrammbehältnisse für jede quantisierte Farbe sind.

4. Das Verfahren gemäß Anspruch 3, das ferner den Schritt des Erzeugens (125) einer Fehlerschätztabelle (155), die der Datentabelle (150) entspricht, umfasst.


**Revendications**

1. Dispositif pour analyser automatiquement une représentation graphique d'un graphe en se basant sur une image du graphe, comprenant :

des moyens (120) pour quantifier les couleurs d'une région de l'image du graphe ;
des moyens (115) pour déterminer un type de graphe ;
des moyens pour produire un histogramme indiquant la répartition de couleurs des pixels dans la région, et
des moyens pour produire une table de données (150) représentant le graphe d'origine, en se basant sur le type de graphe déterminé, dans lequel les valeurs de la table de données (150) sont proportionnelles aux comptes de couleurs des fichiers binaires d'histogrammes pour chaque couleur quantifiée.

2. Système selon la revendication 1, comprenant en outre des moyens (125) pour produire une table d'estimation d'erreurs (155) correspondant à ladite table de données (150).

3. Procédé pour analyser automatiquement une représentation graphique d'un graphe en se basant sur une image du graphe, le procédé comprenant les étapes consistant à :

quantifier (104) les couleurs d'une région de l'image du graphe ;
déterminer (106) un type de graphe ;
produire (109, 122, 124) un histogramme indiquant la répartition de couleurs des pixels dans la région, et
produire (119) une table de données représentant le graphe d'origine, en se basant sur le type de graphe déterminé, dans lequel les valeurs de la table de données (150) sont proportionnelles aux comptes de couleurs des fichiers binaires d'histogrammes pour chaque couleur quantifiée.

4. Procédé selon la revendication 3, comprenant en outre l'étape de génération (125) d'une table d'estimation d'erreurs (155) correspondant à ladite table de données (150).

**Fig. 1**

**DISPLAY**

<u>19</u>

32

USER INTERFACE    <u>13</u>

<u>18</u>    PREVIEW SCAN

REGION SELECTION LOGIC
<u>130</u>

26

31

46

<u>21</u>    DATA
MANAGER

<u>38</u>    API

<u>22</u>    REGION
MANAGER

47

28

29

<u>17</u>    ANALYSIS CODE

AUTOMATIC
GRAPH PARSING
LOGIC    <u>110</u>

<u>120</u>    DATA
PALLETIZER

GRAPH
TYPING
<u>115</u>    LOGIC

ERROR
ESTIMATION
<u>125</u>    LOGIC

**Fig. 2**

115 GRAPH TYPING LOGIC

135 TOOLS

RECTANGLE RECOGNITION (CONSTANT COLOR, SOLID 140 REGION)

DISC RECOGNITION (CONSTANT COLOR, SOLID 160 REGION)

RECTANGLE RECOGNITION (BOX, OUTLINE) 145

DISC RECOGNITION (CIRCLE, OUTLINE) 165

QUADRILATERAL RECOGNITION (CONSTANT COLOR, SOLID REGION) 170

PIE PIECE RECOGNITION (CONSTANT COLOR, SOLID 180 REGION)

QUADRILATERAL RECOGNITION (OUTLINE) 175

PIE PIECE RECOGNITION (OUTLINE) 185

# Fig. 3A

50 →

| X | 0 | 1 | 2 | 3 | 4 | 5 | 6 | 7 | 8 | 9 |
|---|---|---|---|---|---|---|---|---|---|---|
| Y | | | | | | | | | | |
| 0 | R | R | (R) | R | R | R | R | R | R | R ← 51 |
| 1 | | R | (R) | (B) | B | B | B | B | B | R | R ← 51 |
| 2 | | R | R | B | B | B | B | B | B | R | R |
| 3 | | R | R | B | (B) | B | B | B | B | R | R |
| 4 | | R | R | R | R | R | R | R | R | R | R |

52

# Fig. 3B

18

100

CAPTURE IMAGE DATA
101

DEFINE SELECTION
REGION
102

PALLETIZE REGION
104

GRAPH TYPE
106

a

# Fig. 4A

**Fig. 4B**

**Fig. 5A**

**Fig. 5B**

EP 1 018 694 B1

Fig. 5C

Fig. 6A

Fig. 6B